# EUROPÄISCHE PATENTSCHRIFT

(11) **EP 2 361 662 B1**
(45) Veröffentlichungstag und Bekanntmachung des Hinweises auf die Patenterteilung: **14.03.2012**
(21) Anmeldenummer: 10194640.8
(22) Anmeldetag: 12.12.2010
(51) Int. Cl.: B01D 25/127

(54) **Horizontalplattenfilter**
Horizontal plate filter
Filtre à plaques horizontales

(30) Priorität: 14.01.2010 DE 102010000922
(43) Veröffentlichungstag der Anmeldung: 31.08.2011
(73) Patentinhaber: ACHENBACH BUSCHHÜTTEN GmbH, 57223 Kreuztal (DE)
(72) Erfinder: Barten, Axel Dipl.-Ing. (ETH), 57078, Siegen (DE); Latzel, Dr. Werner, 77704, Oberkirch (DE)
(74) Vertreter: Tappe, Hartmut

(56) Entgegenhaltungen:
- CH-A- 408 860
- DE-A1- 4 207 564
- US-A- 4 329 228

## Beschreibung

Die vorliegende Erfindung betrifft einen Horizontalplattenfilter zum Filtern von Flüssigkeiten, insbesondere von als Kühl- und Schmiermittel eingesetztem Walzöl, mit in einem Gerüst zu mindestens einem Filterplattenstapel übereinander angeordneten, trennbar verbundenen Filterplatten mit an gegenüber liegenden Seiten angeordneten Ansätzen mit Durchgangsöffnungen, die bei geschlossenem Plattenstapel auf einer Zulaufseite einen Eingangskanal und auf einer Ablaufseite einen Ausgangskanal bilden, über einen Zuströmkanal beziehungsweise einen Ausströmkanal an die durch Zwischenböden jeweils zweier Filterplatten gebildeten Filterkammern angeschlossen sind, wobei beim Filtern zwischen den Filterplatten ein Filtervlies abgedichtet eingespannt ist, derart, dass die Filterkammern durch das Filtervlies in eine über den Zuströmkanal mit dem Eingangskanal verbundene, oberhalb des Filtervlieses ausgebildete Schmutzflüssigkeitskammer zur Aufnahme von verunreinigter Flüssigkeit und in eine über den Ausströmkanal mit dem Ausgangskanal verbundene, unterhalb des Filtervlieses ausgebildete Filtratkammer zur Aufnahme gereinigter Flüssigkeit unterteilt sind, wobei auf der Zulaufseite in den Ansatz oder einem weiteren Ansatz weitere Durchgangsöffnungen ausgebildet sind, die bei geschlossenen Plattenstapel einen Be- und Entlüftungskanal bilden und die über einen Verbindungskanal mit der Schmutzflüssigkeitskammer verbunden sind.

Ein Horizontalplattenfilter der eingangs genannten Art ist aus der DE 42 07 564 A1 bekannt. Der bekannte Horizontalplattenfilter wird zyklisch betrieben, wobei die Dauer eines Filterzyklusses im Wesentlichen bestimmt ist durch die mögliche Filterleistung des Filtervlieses. Dabei wird die Filterwirkung im Wesentlichen bestimmt durch einen so genannten Filterkuchen, der sich im Betrieb des Horizontalplattenfilters kontinuierlich auf dem Filtervlies aufbaut und während des Betriebes fortwährend verdichtet bis ein maximaler Filterdruck erreicht wird, der den Zeitpunkt bestimmt, zu dem ein Austausch des Filtervlieses erfolgen muss. Hierzu werden die Filterplatten auseinander bewegt, so dass das Filtervlies entfernt werden und vor dem erneuten Zusammenfahren der Filterplatten zur Ausbildung des Filterstapels gegen ein neues Filtervlies ausgetauscht werden kann.

Üblicherweise geschieht dies über eine Filtervliesfördereinrichtung, die das Filtervlies als Endlosband bevorratet, so dass das Filtervlies entsprechend dem Filterzyklus bei auseinander bewegten Filterplatten durch den Plattenstapel abschnittsweise vorbewegt wird.

Vor dem Auseinanderfahren der Filterplatten und dem Vorschub des mit dem verbrauchten Filterkuchen belegten Filtervlieses wird der Filterkuchen vermittels einer über den Be- und Entlüftungskanal sowie die angeschlossenen Verbindungskanäle erfolgenden Druckluftbeaufschlagung trocken geblasen, so dass nach entsprechender Vorbewegung der verschmutzten Filtervliesabschnitte der Filterkuchen durch geeignete Hilfsmittel, wie beispielsweise Rakel oder dergleichen, von dem Filtervlies abgestreift und getrennt entsorgt werden kann.

Da die Dauer dieses Trocknungsvorgangs wesentlich mitbestimmend ist für die Länge der Zeit, in der der Horizontalplattenfilter nicht betriebsbereit ist, ist es wünschenswert, diese "Trocknungsphase" möglichst kurz zu gestalten.

Der vorstehend erörterten "Trocknungsphase" folgt vor Beginn der eigentlichen "Betriebsphase" in der ein kontinuierlicher Filterbetrieb möglich ist, eine "Entlüftungsphase", in der der Horizontalplattenfilter beziehungsweise die in dem Horizontalplattenfilter übereinander liegend angeordnete Filterkammern beziehungsweise Schmutzflüssigkeitskammern mit zu reinigenden Schmutzflüssigkeiten erstmals befüllt werden und in der der Aufbau des Filterkuchens beginnt. Gleichzeitig mit dem Befüllen der Schmutzflüssigkeitskammern muss die in den Filterkammern vorhandene Luft durch die einströmende Flüssigkeit verdrängt werden. Dabei erfolgt zum Einen die zumindest teilweise Ausbildung eines Schmutzflüssigkeits/Luft-Gemisches und zum Andern - bedingt durch das aufsteigernde Auffüllen des Filterplattenstapels von untern her - eine nach oben hin stetig zunehmende Komprimierung der Luft mit der Folge, dass sich beim Befüllungsvorgang in den Filterkammern zunehmend Turbulenzen ausbilden, die eine gleichmäßige Ausbildung des Filterkuchens gefährden.

Während der Entlüftungsphase wird sowohl Luft als auch Schmutzflüssigkeit durch die Verbindungskanäle aus den Schmutzflüssigkeitskammern in den Be- und Entlüftungskanal verdrängt. Dabei hat sich herausgestellt, dass der zur Verfügung stehende Kanalquerschnitt des Be- und Entlüftungskanals im Wesentlichen von verdrängter Schmutzflüssigkeit ausgefüllt wird, so dass insbesondere im oberen Teil des Filterplattenstapels angesammelte Luft daran gehindert wird, schnell zu entweichen, was die Dauer der Entlüftungsphase wesentlich verkürzen könnte. Stattdessen erfolgt in der Regel eine Entlüftung insbesondere der oberen Filterkammern beziehungsweise Schmutzflüssigkeitskammern erst nach erfolgter, turbulenter Durchmischung von Schmutzflüssigkeit und Luft, so dass die Luft dann nur noch gesammelt in einem Schmutzflüssigkeits/Luft-Gemisch durch den Be- und Entlüftungskanal schwerkraftunterstützt nach unten abgeführt werden kann.

Der vorliegenden Erfindung liegt die Aufgabe zugrunde, einen Horizontalplattenfilter dahingehend zu verbessern, dass der Filterzyklus effektiver gestaltet werden kann, und insbesondere die Anteile der Trocknungsphase und der Entlüftungsphase gegenüber der eigentlichen Betriebsphase des Horizontalplattenfilters verringert werden können, so dass die Filterleistung erhöht wird.

Zur Lösung dieser Aufgabe weist der erfindungsgemäße Horizontalplattenfilter die Merkmale des Anspruchs 1 auf.

Erfindungsgemäß ist der Be- und Entlüftungskanal mit einem Strömungsleitsystem versehen, dass bei einer Entlüftung der Schmutzflüssigkeitskammer aus den Verbindungskanälen in den Be- und Entlüftungskanal einströmende Entlüftungsströme in eine im Be- und Entlüftungskanal ausgebildete, längs einer Kanalwandung des Be- und Entlüftungskanals geleitete Wandströmung mit einem ringförmigen Strömungsquerschnitt zusammenführt.

Das erfindungsgemäß vorgesehene Strömungsleitsystem ermöglicht somit, dass die aus den Schmutzflüssigkeitskammern in den Be- und Entlüftungskanal jeweils eintretende Entlüftungsstrom im Be- und Entlüftungskanal zu einer im Wesentlichen wandparallelen Kanalströmung zusammengeführt werden, mit der Folge, dass der zentrale Bereich des Be- und Entlüftungskanals, also der zentrale Bereich des Kanalquerschnitts im Wesentlichen von den aus den Verbindungskanälen eintretenden Entlüftungsströmen frei ist. Hierdurch ist im Be- und Entlüftungskanal ein für Ausgasungen aus der Fluidströmung zur Verfügung stehendes freies Lumen generiert, so dass die Entlüftung nicht zwangsläufig nur durch das durch den Be- und Entlüftungskanal abtransportierte Schmutzflüssigkeits/Gas-Gemisch erfolgen kann, sondern bereits unmittelbar nach Austritt des jeweiligen Entlüftungsstroms aus dem Verbindungskanal in den Be- und Entlüftungskanal. Hierdurch ist es möglich, dass bereits im Be- und Entlüftungskanal Vorkehrungen getroffen werden können, um für eine von der Schmutzflüssigkeit unabhängige Ableitung der Luft zu sorgen, beispielsweise durch eine am oberen Ende des Be- und Entlüftungskanals vorgesehene Entlüftungsöffnung.

Bei einer besonders bevorzugten Ausführungsform umfasst das Strömungsleitsystem zur Ausbildung eines hohlzylinderförmigen, durch die Kanalwandung radial begrenzten Strömungskörpers eine Mehrzahl von jeweils den Verbindungskanälen zugeordneten Strömungsleiteinrichtungen, die die aus den Verbindungskanälen austretenden Entlüftungsströme in eine zur Kanalwandung im Wesentlichen parallele und unter einem Winkel zur Horizontalen nach unten geneigte, helixförmig verlaufende Wandströmung umlenken.

Aufgrund der helixförmig ausgebildeten Strömung bildet sich im Be- und Entlüftungskanal ein hydraulischer Zyklon aus, mit einem zentralen flüssigkeitsfreien Bereich, in dem ein Unterdruck entsteht. Dieser Unterdruck unterstützt die Endgasung der Entlüftungsströme, so dass die gewünschte Entlüftung schneller erfolgen kann.

Wenn gemäß einer vorteilhaften Ausführungsform die Strömungsleiteinrichtungen als Kanaleinsätze ausgebildet sind, die in einen Austrittquerschnitt der Verbindungskanäle einsetzbar sind, können die Strömungsleiteinrichtungen auf besonders einfache Art und Weise realisiert werden. Insbesondere erfordern derartig ausgebildete Strömungsleiteinrichtungen keine besonderen konstruktiven oder fertigungstechnischen Maßnahmen, die beispielsweise eine besondere Gestaltung oder Ausrichtung des Verbindungskanals als solchen betreffen.

Besonders vorteilhaft ist es auch, wenn der Be- und Entlüftungskanal an seinem unteren Ende einen Bodenauslass zur Ableitung flüssiger Bestandteile der Wandströmung aus dem Be- und Entlüftungskanal und an seinem oberen Ende einen Kopfauslass zur Ableitung von gasförmigen Bestandteilen der Wandströmung aufweist, da somit jeweils der gesamte Endquerschnitt des Be- und Entlüftungskanals zur Ableitung von Schmutzflüssigkeit beziehungsweise zur Ableitung von Gas zur Verfügung steht.

Wenn zur Ausbildung eines an den Kopfauslass des Be- und Entlüftungskanals anschließenden Entlüftungskanals zur Ableitung der gasförmigen Bestandteile aus dem Be- und Entlüftungskanal in dem Ansatz oder einem weiteren Ansatz der Filterplatten weitere Durchgangsöffnungen ausgebildet sind, die bei geschlossenem Plattenstapel den Entlüftungskanal ausbilden, kann zur weiteren Ableitung von Gas aus dem Kopfauslass auf die Anordnung entsprechender Rohrleitungs- oder Schlauchsysteme verzichtet werden. Vielmehr kann die Ableitung durch einen in dem Ansatz ausgebildeten Entlüftungskanal erfolgen, insbesondere ergänzt durch einen Anschluss einer Rohr- oder Schlauchverbindung an einer Bodenplatte des Horizontalplattenfilters, so dass hierdurch keine Beeinträchtigungen der notwendigen Hubbewegungen der einzelnen Filterplatten zum Öffnen und Schließen des Plattenstapels entstehen.

Eine besonders kompakte Ausgestaltung ergibt sich, wenn der Entlüftungskanal zusammen mit dem Be- und Entlüftungskanal auf der Zulaufseite des Filterplattenstapels angeordnet ist.

Nachfolgend wird eine vorteilhafte Ausführungsform der Erfindung anhand der Zeichnung näher erläutet. Es zeigen:
- **Fig. 1:**: eine Seitenansicht eines Horizontalplattenfilters mit zwei Filterplattenstapeln;
- **Fig. 2:**: die Zulaufseite eines Filterplattenstapels eines Horizontal- plattenfilters mit einem Eingangskanal, einem Be- und Ent- lüftungskanal und einem Entlüftungskanal;
- **Fig. 3:**: eine Draufsicht zweier aufeinander liegender Filterplatten;
- **Fig. 4:**: eine Seitenansicht zweier aufeinander liegender Filterplat- ten;
- **Fig. 5:**: einen Schnitt gemäß Schnittlinienverlauf V-V in **Figur 3****;**
- **Fig. 6:**: einen Schnitt gemäß Schnittlinienverlauf VI-VI in **Figur 3****;**
- **Fig. 7:**: eine Prinzipdarstellung des Strömungsverlaufs in dem Be- und Entlüftungskanal des in **Figur 2** dargestellten Platten- stapels.

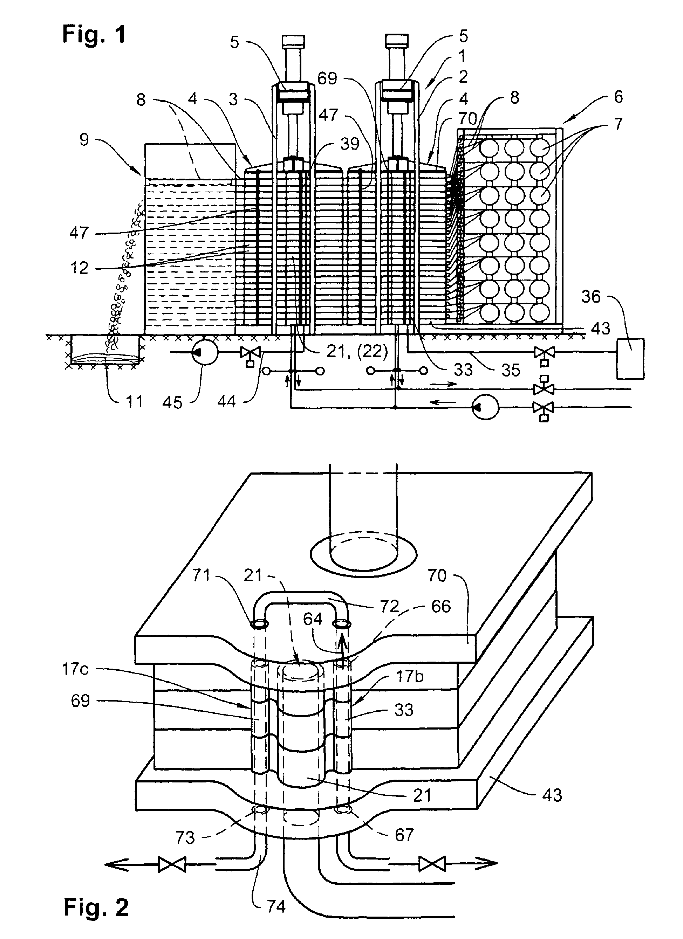

Die Hauptbauteile des in **Fig. 1** dargestellten Horizontalplattenfilters zum Filtern von großen Flüssigkeitsmengen, z.B. von als Kühl- und Schmiermitteln in Walzwerken eingesetztem Walzöl oder von Kühl- und Schmiermitteln für Werkzeugmaschinen und dergleichen Bearbeitungsmaschinen, sind der Filterteil 1 mit zwei in Gerüsten 2, 3 untergebrachten Filterplattenstapeln 4, auf den Gerüsten 2, 3 angebrachte Hubzylinder 5 zum Öffnen und Schließen der Filterplattenstapel 4, ein dem Filterteil 1 vorgeordnetes Magazin 6 mit einer Anzahl von Vorratsrollen 7 mit einem in Bandform kontinuierlich ausgebildeten Filtervlies 8, z.B. aus Polyester, eine dem Filterteil 1 nachgeordnete Ausziehvorrichtung 9 zum Transport des Filtervlieses 8 sowie ein hinter der Ausziehvorrichtung 9 stehende Aufnahmebehälter 11 für den von den einzelnen Filtervliesbahnen abfallenden, verbrauchten Filterkuchen.

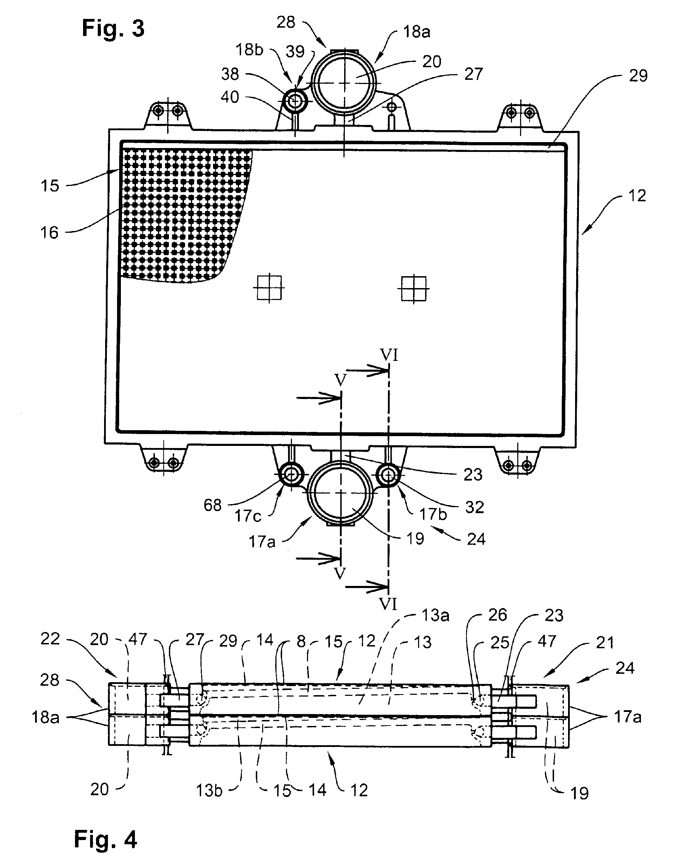

Wie auch **Fig. 4** zeigt, bilden je zwei Filterplatten 12 eine Filterkammer 13, die durch das zwischen den Platten 12 eingespannte Filtervliesband 8 in eine Schmutzflüssigkeitskammer 13a und eine Filtratkammer 13b unterteilt wird.

Wie insbesondere **Fig. 3** zeigt, liegt das Filtervlies 8 auf einem Lochblech 14 auf, das sich auf über die gesamte Oberseite eines Zwischenbodens 15 jeder Filterplatte 12 verteilten Noppen 16 abstützt.

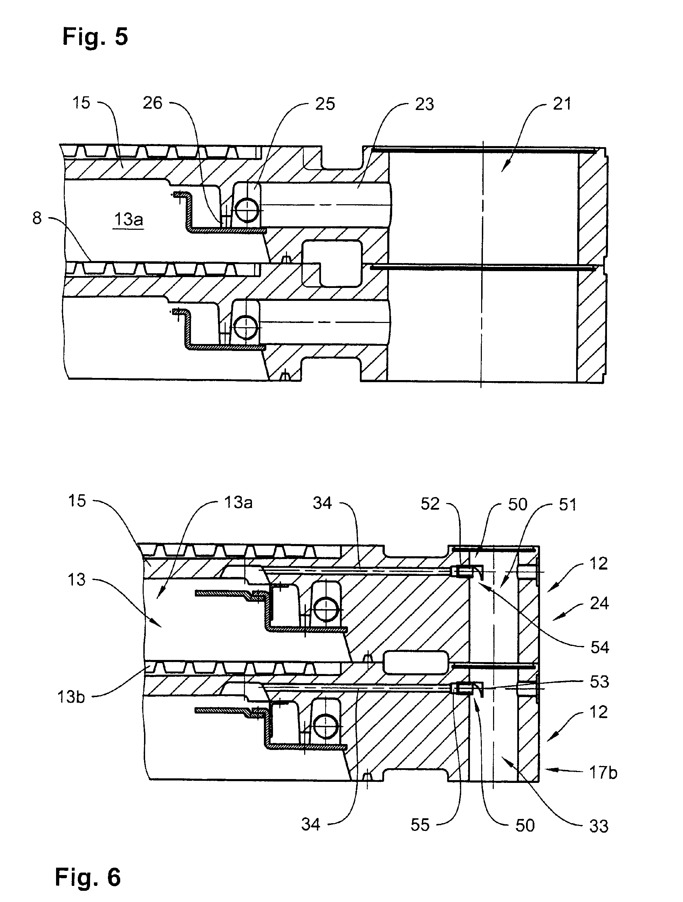

Mittig an den beiden Längsseiten der rechteckigen Filterplatten 12 befinden sich Ansätze 17a, 18a mit Durchgangsöffnungen 19, 20, die bei geschlossenem Plattenstapel 4 einen Eingangskanal 21 für die zu filternde Schmutzflüssigkeit, zum Beispiel Walzöl, und einen Ausgangskanal 22 für das Filtrat bilden **(****Fig. 4****).** Von der Durchgangsöffnung 19 in dem Ansatz 17a jeder Filterplatte 12 zur Bildung des Eingangskanals 21 zweigt ein Zuströmkanal 23 ab, der in einem parallel zu der Zulaufseite 24 der Platte 12 geführten Verteilerkanal 25 endet, der über einen Zulaufspalt 26 mit dem unter dem Zwischenboden 15 der Platte 12 gelegenen, die Schmutzflüssigkeitskammer 13a über dem Filtervlies 8 bildenden Plattenraum verbunden ist **(****Fig. 5****).** Von der Durchgangsöffnung 20 in dem Ansatz 18a jeder Filterplatte 12 zur Bildung des Ausgangskanals 22 zweigt ein Ausströmkanal 27 ab, der in einen parallel zu der Ablaufseite 28 der Platte 12 verlaufenden Sammelkanal 29 eintritt, welcher die Verbindung zu dem über dem Zwischenboden 15 der Filterplatte 12 gelegenen, die Filtratkammer 13b unter dem Filtervlies 8 bildenden Plattenraum bildet **(****Fig. 4****).**

Wenngleich vorstehend die Ansätze 17a und 18a als mittig an den Längsseiten der Filterplatten 12 angeordnet beschrieben werden, können die Ansätze natürlich auch abweichend angeordnet bzw. ausgebildet sein. Insbesondere ist es nicht notwendig, dass die Ansätze als im Querschnitt gegenüber den Filterplatten reduzierte Vorsprünge ausgestaltet sind. Ebenso können die Ansätze durch beliebig gestaltete, sich außerhalb der Filterkammer erstreckende Randbereiche der Filterplatten ausgebildet sein.

Wie den **Fig. 3** **und** **6** zu entnehmen ist, ist auf der Zulaufseite 24 jeder Filterplatte 12 zusammen mit dem Ansatz 17a ein weiterer Ansatz 17b mit einer Durchgangsöffnung 32 zur Bildung eines Be- und Entlüftungskanals 33 bei geschlossenem Plattenstapel 4 angeordnet, wobei von der Durchgangsöffnung 32 jeder Platte 12 ein Verbindungskanal 34 in den die Schmutzflüssigkeitskammer 13a bildenden Plattenraum unter dem Zwischenboden 15 abzweigt. Wie insbesondere **Fig. 1** zeigt, ist der Be- und Entlüftungskanal 33 jedes Plattenstapels 4 über eine Verbindungsleitung 35 an eine Druckluftquelle 36 angeschlossen, so dass während einer Trocknungsphase des Filterzyklusses eine Beaufschlagung eines auf dem Filtervlies 8 ausgebildeten Filterkuchens mit Druckluft erfolgen kann.

Wie **Fig. 3** zeigt, ist auf der Ablaufseite 28 jeder Filterplatte 12 zusammen mit dem Ansatz 18a ein zweiter Ansatz 18b mit einer Durchgangsöffnung 38 zur Ausbildung eines Evakuierungskanals 39 (siehe auch **Fig. 2****)** bei geschlossenem Plattenstapel 4 angeordnet, wobei von der Durchgangsöffnung 38 jeder Platte 12 ein Verbindungskanal 40 zu einer hier nicht mehr dargestellten umlaufenden Dichtungsnut in einer Plattenunterseite 42 führt, die zur Ableitung von Lecköl dient. Über eine an eine Bodenplatte 43 angeschlossene Verbindungsleitung 44 wird mittels einer Vakuumpumpe 45 das Lecköl abgefördert.

Wie bereits eingangs ausgeführt, erfolgt nachfolgend der Trocknungsphase ein Öffnen des Filterplattenstapels 4 durch Betätigung der Hubzylinder 5, so dass mittels der Ausziehvorrichtung 9 zuvor zwischen den einzelnen Filterplatten 12 angeordnete Abschnitte des Filtervlieses 8 zusammen mit dem darauf angeordneten, getrockneten Filterkuchen aus den zwischen den Filterplatten 12 ausgebildeten Zwischenräumen herausgefördert werden können. Nachfolgend werden die Filterplattenstapel 4 mittels der Hubzylinderplatten 5 wieder geschlossen, so dass ein neuer Abschnitt des Filtervlieses 8 zwischen den Filterplatten 12 geklemmt aufgenommen ist.

In der nunmehr als Teil des Filterzyklusses der Trocknungsphase nachfolgenden Entlüftungsphase folgt eine erstmalige Befüllung der Filterkammern 13 beziehungsweise der Schmutzflüssigkeitskammer 13a mit verunreinigter Flüssigkeit, wobei gleichzeitig mit der Förderung der Flüssigkeit durch den Eingangskanal 21 und die jeweils daran anschließenden Zuströmkanäle 23 sowohl Luft mit in die Filterkammern 13 hineingefördert wird **(****Fig. 5****),** als auch durch die mit dem Be- und Entlüftungskanal verbundenen Verbindungskanäle 34 Luft beziehungsweise ein Flüssigkeits/Luft-Gemisch aus den Filterkammern 13 in den Be- und Entlüftungskanal 33 verdrängt wird **(****Fig. 6****).**

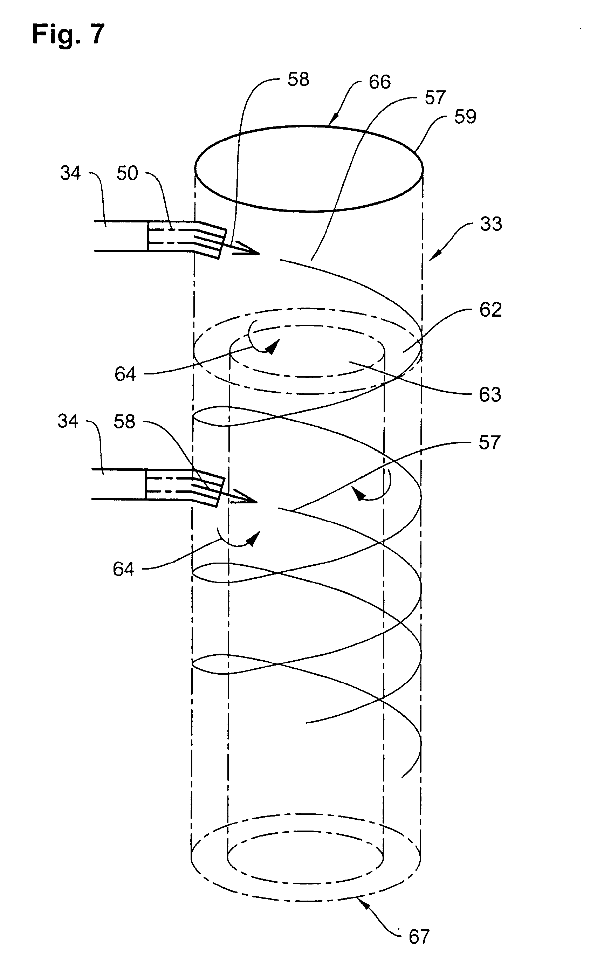

Wie insbesondere der Darstellung in **Fig. 6** zu entnehmen ist, sind die Verbindungskanäle 34 mit Strömungsleiteinrichtungen 50 versehen, die in dem Be- und Entlüftungskanal 33 ein Strömungsleitsystem 51 ausbilden. Bei dem in **Fig. 6** dargestellten Ausführungsbeispiel sind die Strömungsleiteinrichtungen 50 als Verbindungskanaleinsätze ausgebildet, die einen hülsenförmig ausgebildeten Einschraubteil 52 aufweisen, der zum Be- und Entlüftungskanal 33 hin mit einer hier einstückig angeschlossenen Prallplatte 53 versehen ist. Die Prallplatte 53 bildet zusammen mit dem hülsenförmigen Einschraubteil 52 ein Austrittsmundstück 54, das bei der Aufnahme des Einschraubteils 52 in eine am Austrittsende des Verbindungskanals ausgebildete Aufnahmebohrung 55 hinsichtlich der Austrittsrichtung so eingestellt werden kann, dass - wie in **Fig. 7** schematisch dargestellt - eine durch den Verbindungskanal 34 in die Strömungsleiteinrichtung 50 zunächst eintretende und anschließend aus der Strömungsleiteinrichtung 50 austretende Entlüftungsströmung 57 einen Strömungsvektor 58 aufweist, der schräg nach unten und im Wesentlichen parallel zu einer Kanalwandung 59 des Be- und Entlüftungskanal 33 ausgerichtet ist.

Wie **Fig. 7** weiter zeigt, ergibt sich hierdurch für die jeweilige aus der jedem Verbindungskanal 34 zugeordneten Strömungsleiteinrichtung 50 austretende Entlüftungsströmung 57 ein im Wesentlichen helixförmiger wandparalleler Verlauf, wobei sich in dem Be- und Entlüftungskanal 33 die einzelnen Entlüftungsströmungen 57 zu einem Gesamtentlüftungsstrom vereinigen, der in dem Be- und Entlüftungskanal 33 einen hydraulischen Zyklon ausbildet mit einem näherungsweise zylindermantelförmig ausgebildeten Strömungskörper 62. Der Strömungskörper 62 weist eine durch den nach unten gerichteten Spin stabilisierte Struktur auf, mit einem im Wesentlichen konzentrisch ausgebildeten freien Lumen 63, in das in der Flüssigkeit enthaltenes Gas, also beispielsweise die aus den Filterkammern 13 verdrängte Luft 64, austreten kann. Unterstützt wird das Austreten der Luft 64 durch den aufgrund des Zykloneffekts im Lumen 63 ausgebildeten Unterdruck. Somit findet also bereits in dem Be- und Entlüftungskanal 33 eine Trennung zwischen Flüssigkeit und Gas statt, so dass der Entlüftungsvorgang wesentlich schneller durchgeführt werden kann, als wenn die Trennung von Flüssigkeit und Gas erst nachfolgend einem Austritt der zunächst als Gemisch vorliegenden Flüssigkeit/Gas-Strömung nach aus dem Be- und Entlüftungskanal 33 erfolgt.

Entsprechend der in **Fig. 7** dargestellten prinzipiellen Wirkungsweise kann das aus den Entlüftungsströmungen 57 in das freie Lumen 63 austretende Gas unmittelbar nach Austritt nach oben geführt und durch einen Kopfauslass 66 im Be- und Entlüftungskanals 33 abgeführt werden, wohingegen der flüssige Strömungsanteil schwerkraftunterstützt nach unten durch einen Bodenauslass 67 abgefördert werden kann.

Bei dem in **Fig. 2** dargestellten Filterplattenstapel 4, der aus einzelnen, insbesondere in **Fig. 3** dargestellten Filterplatten 12 zusammengesetzt ist, ist ergänzend zu dem Ansatz 17b der zur Ausbildung des Be- und Entlüftungskanals 33 dient, ein weiterer Ansatz 17c vorgesehen, der an jeder Filterplatte 12 eine ausgebildete Durchgangsöffnung 68 aufweist, die bei geschlossenem Plattenstapel 4 einen Entlüftungskanal 69 bilden. Über eine mit dem Kopfauslass 66 des Be- und Entlüftungskanals 33 in einer Druckplatte 70 mit einem Kopfeinlass 71 des Entlüftungskanals 69 verbundene Verbindungsleitung 72 kann die im Be- und Entlüftungskanal 33 ausgebildete Gasströmung bzw. die Luft 64 durch den Entlüftungskanal 69 zu einem in der Bodenplatte 43 ausgebildeten Bodenauslass 73 befördert und schließlich über eine hieran angeschlossene Anschlussleitung 74 abgefördert werden.

## Patentansprüche

1. Horizontalplattenfilter zum Filtern von Flüssigkeiten, insbesondere von als Kühl- und Schmiermittel eingesetztem Walzöl, mit in einem Gerüst zu mindestens einem Filterplattenstapel (4) übereinander angeordneten, trennbar verbundenen Filterplatten (12) mit an gegenüber liegenden Seiten angeordneten Ansätzen (17a, 18a) mit Durchgangsöffnungen (19, 20), die bei geschlossenem Plattenstapel auf einer Zulaufseite (24) einen Eingangskanal (21) und auf einer Ablaufseite (28) einen Ausgangskanal (22) bilden, die über einen Zuströmkanal (23) bzw. einen Ausströmkanal (27) an die durch Zwischenböden (15) jeweils zweier Filterplatten gebildeten Filterkammern (13) angeschlossen sind, wobei beim Filtern zwischen den Filterplatten ein Filtervlies (8) abgedichtet eingespannt ist, derart, dass die Filterkammern durch das Filtervlies in eine über den Zuströmkanal mit dem Eingangskanal verbundenen, oberhalb des Filtervlieses ausgebildete Schmutzflüssigkeitskammer (13a) zur Aufnahme von verunreinigter Flüssigkeit und in eine über den Ausströmkanal mit dem Ausgangskanal verbundene, unterhalb des Filtervlieses ausgebildete Filtratkammer (13b) zur Aufnahme gereinigter Flüssigkeit unterteilt sind, wobei auf der Zulaufseite in dem Ansatz (17a) oder einem weiteren Ansatz (17b) weitere Durchgangsöffnungen (32) ausgebildet sind, die bei geschlossenen Plattenstapel einen Be- und Entlüftungskanal (33) bilden und die über einen Verbindungskanal (34) mit der Schmutzflüssigkeitskammer verbunden sind,
**dadurch gekennzeichnet,**
**dass** der Be- und Entlüftungskanal mit einem Strömungsleitsystem (51) versehen ist, das bei einer Entlüftung der Schmutzflüssigkeitskammer aus den Verbindungskanälen in den Be- und Entlüftungskanal einströmende Entlüftungsströme (57) in eine im Be- und Entlüftungskanal ausgebildete, längs einer Kanalwand (59) des Be- und Entlüftungskanals geleitete Wandströmung mit einem ringförmigen Strömungsquerschnitt zusammenführt.

2. Horizontalplattenfilter nach Anspruch 1,
**dadurch gekennzeichnet,**
**dass** das Strömungsleitsystem (51) zur Ausbildung eines hohlzylinderförmigen, durch die Kanalwandung (59) radial begrenzten Strömungskörpers (62) eine Mehrzahl von jeweils den Verbindungskanälen (34) zugeordneten Strömungsleiteinrichtungen (50) umfasst, die die Entlüftungsströme in eine zur Kanalwandung im Wesentlichen parallele und unter einem Winkel zur Horizontalen nach unten geneigte, helixförmig verlaufende Wandströmung umlenken.

3. Horizontalplattenfilter nach Anspruch 2,
**dadurch gekennzeichnet,**
**dass** die Strömungsleiteinrichtungen (50) als Verbindungskanaleinsätze ausgebildet sind, die in einen Austrittsquerschnitt der Verbindungskanäle (34) einsetzbar sind.

4. Horizontalplattenfilter nach einem der vorangehenden Ansprüche,
**dadurch gekennzeichnet,**
**dass** der Be- und Entlüftungskanal (33) an seinem unteren Ende einen Bodenauslass (67) zur Ableitung flüssiger Bestandteile der Wandströmung aus dem Be- und Entlüftungskanal und an seinem oberen Ende einen Kopfauslass (66) zur Ableitung von gasförmigen Bestandteilen der Wandströmung aufweist.

5. Horizontalplattenfilter nach Anspruch 4,
**dadurch gekennzeichnet,**
**dass** zur Ausbildung eines an den Kopfauslass (66) des Be- und Entlüftungskanals (33) anschließenden Entlüftungskanals (69) zur Ableitung der gasförmigen Bestandteile aus dem Be- und Entlüftungskanal in dem Ansatz (17a) oder einem weiteren Ansatz (17c) weitere Durchgangsöffnungen (68) ausgebildet sind, die bei geschlossenem Filterplattenstapel (4) den Entlüftungskanal ausbilden.

6. Horizontalplattenfilter nach Anspruch 5,
**dadurch gekennzeichnet,**
**dass** sich der Entlüftungskanal (69) zusammen mit dem Be- und Entlüftungskanal (33) auf der Zulaufseite (24) des Filterplattenstapels (4) befindet.

## Claims

1. A horizontal plate filter for the filtering of fluids, in particular of rolling oil used as coolant and lubricant, with detachably connected filter plates (12) arranged one over the other in a frame to form at least one filter plate stack (4), with extensions (17a, 18a) arranged on opposite sides with through-openings (19, 20), which with a closed plate stack form on a feed side (24) an input channel (21) and on a discharge side (28) form an output channel (22), which are connected via an inflow channel (23) or respectively an outflow channel (27) to the filter chambers (13) formed by intermediate bases (15) respectively of two filter plates, wherein on filtering, a filter mat (8) is clamped in a sealed manner between the filter plates, such that the filter chambers are divided by the filter mat into a dirt fluid chamber (13a) connected via the inflow channel with the input channel and constructed above the filter mat, to receive contaminated fluid, and into a filtrate chamber (13b) connected via the outflow channel with the output channel and constructed beneath the filter mat, to receive purified fluid, wherein on the feed side in the extension (17a) or in a further extension (17b) further through-openings (32) are constructed, which with a closed plate stack form an aeration and deaeration channel (33) and which are connected via a connecting channel (34) with the dirt fluid chamber,
**characterized in that**
the aeration and deaeration channel is provided with a flow-directing system (51), which on a deaeration of the dirt fluid chamber brings together deaeration flows (57) from the connecting channels flowing into the aeration and deaeration channel into a wall flow, having an annular flow cross-section, formed in the aeration and deaeration channel and directed along a channel wall (59) of the aeration and deaeration channel.

2. The horizontal plate filter according to Claim 1,
**characterized in that**
the flow-directing system (51) for forming a flow body (62) of hollow cylindrical shape, delimited radially by the channel wall (59) comprises a plurality of flow-directing arrangements (50) associated respectively with the connecting channels (34), which deflect the deaeration flows into a wall flow running in a helix shape substantially parallel to the channel wall and inclined downwards at an angle to the horizontal.

3. The horizontal plate filter according to Claim 2,
**characterized in that**
the flow-directing arrangements (50) are constructed as connecting channel inserts which are able to be inserted into an outlet cross-section of the connecting channels (34).

4. The horizontal plate filter according to one of the preceding claims,
**characterized in that**
the aeration and deaeration channel (33) has at its lower end a base outlet (67) for the discharging of liquid components of the wall flow out of the aeration and deaeration channel and has at its upper end a head outlet (66) for the discharging of gaseous components of the wall flow.

5. The horizontal plate filter according to Claim 4,
**characterized in that**
for the construction of a deaeration channel (69) adjoining the head outlet (66) of the aeration and deaeration channel (33) for the discharging of the gaseous components from the aeration and deaeration channel, further through-openings (68) are constructed in the extension (17a) or in a further extension (17c), which through-openings form the deaeration channel with a closed filter plate stack (4).

6. The horizontal plate filter according to Claim 5,
**characterized in that**
the deaeration channel (69) together with the aeration and deaeration channel (33) is situated on the feed side (24) of the filter plate stack (4).

## Revendications

1. Filtre à plaques horizontales pour filtrer des liquides, notamment de l'huile de laminage mise en oeuvre en tant qu'agent réfrigérant ou en tant que lubrifiant, avec des plaques filtrantes (12) disposées les unes au-dessus des autres dans une ossature en au moins une pile de plaques filtrantes (4), reliées de façon amovible avec des embouts (17a, 18a) disposés sur des côtés opposés, avec des ouvertures de passage (19, 20), qui lorsque la pile de plaques est fermée forment sur un côté d'amenage (24) un canal d'entrée (21) et sur un côté d'écoulement (28) un canal de sortie (22), qui par l'intermédiaire d'un canal d'affluence (23) respectivement d'un canal d'effluence (27) sont raccordées sur des chambres de filtration (13) formées par des fonds intermédiaires (15) de chaque fois deux plaques filtrantes, lors de la filtration, un rembourrage de filtration (8) étant enserré de manière étanche entre les plaques filtrantes de telle sorte que les chambres de filtration soient divisées par le rembourrage de filtration en une chambre pour liquide souillé (13a) reliée au canal d'entrée par le canal d'affluence, conçue au-dessus du rembourrage de filtration, pour recevoir du liquide souillé et en une chambre à filtrats (13b) reliée au canal de sortie par le canal d'effluence, conçue en-dessous du rembourrage de filtration pour recevoir du liquide épuré, sur le côté d'amenage, dans l'embout (17a) ou dans un autre embout (17b) étant conçues d'autres ouvertures de passage (32), qui lorsque la pile de plaques est fermée forment un canal d'aération et de désaération (33) et qui par un canal de liaison (34) sont reliées à la chambre pour liquide souillé.
**caractérisé en ce que** le canal d'aération et de désaération est muni d'un système de canalisation du flux (51) qui lors d'une désaération de la chambre pour liquide souillé réunit des flux de désaération (57) affluant à partir des canaux de liaison dans le canal d'aération et de désaération en un flux de paroi formé dans le canal d'aération et de désaération, dirigé le long d'une paroi de canal (59) du canal d'aération et de désaération, ayant une section transversale d'écoulement de forme annulaire.

2. Filtre à plaques horizontales selon la revendication 1, **caractérisé en ce que** pour former un corps d'écoulement (62) ayant la forme d'un cylindre creux, délimité en direction radiale par la paroi de canal (59), le système de canalisation du flux (51) comprend une pluralité de dispositifs de canalisation du flux (50) respectivement associés aux canaux de liaison (34), qui dévient les flux de désaération en un flux de paroi sensiblement parallèle à la paroi de canal, s'écoulant sous forme hélicoïdale et incliné vers le bas en formant un angle par rapport à l'horizontale.

3. Filtre à plaques horizontales selon la revendication 2, **caractérisé en ce que** les dispositifs de canalisation du flux (50) sont conçus sous la forme d'inserts de canaux de liaison qui sont insérables dans une section transversale de sortie des canaux de sortie (34).

4. Filtre à plaques horizontales selon l'une quelconque des revendications précédentes, **caractérisé en ce que** le canal d'aération et de désaération (33) comporte sur son extrémité inférieure une bouche de sortie au sol (67) pour évacuer des composants liquides du flux de paroi hors du canal d'aération et de désaération et sur son extrémité supérieure une bouche de sortie de tête (66) pour évacuer des composants gazeux hors du flux de paroi.

5. Filtre à plaques horizontales selon la revendication 4, **caractérisé en ce que** pour créer un canal de désaération (69) se raccordant sur la bouche de sortie de tête (66) du canal d'aération et de désaération (33) pour évacuer les composants gazeux du canal d'aération et de désaération, des ouvertures de passage supplémentaires (68) qui lorsque la pile de plaques filtrantes (4) est fermée forment le canal de désaération sont conçues dans l'embout (17a) ou dans un autre embout (17 c).

6. Filtre à plaques horizontales selon la revendication 5, **caractérisé en ce que** le canal de désaération (69) se trouve ensemble avec le canal d'aération et de désaération (33) sur le côté d'amenage de la pile de plaques filtrantes (4).
